# EUROPEAN PATENT SPECIFICATION

(11) **EP 4 019 350 B1**
(45) Date of publication and mention of the grant of the patent: **03.01.2024**
(21) Application number: 21206896.9
(22) Date of filing: 08.11.2021
(51) Int. Cl.: B60W 30/095, B60W 30/06, B62D 15/02

(54) **METHOD AND DEVICE FOR AUTOMATIC PARKING, VEHICLE AND STORAGE MEDIUM**
VERFAHREN UND VORRICHTUNG ZUM AUTOMATISCHEN PARKEN, FAHRZEUG UND SPEICHERMEDIUM
PROCÉDÉ ET DISPOSITIF DE STATIONNEMENT AUTOMATIQUE, VÉHICULE ET SUPPORT DE STOCKAGE

(30) Priority: 24.12.2020 CN 202011556794
(43) Date of publication of application: 29.06.2022
(73) Proprietor: Guangzhou Xiaopeng Autopilot Technology Co., Ltd., Guangzhou, Guangdong 510640 (CN)
(72) Inventor: SU, Jingren, Guangzhou (CN); HE, Ruotao, Guangzhou (CN); HUANG, Yubo, Guangzhou (CN); CHEN, Shengjun, Guangzhou (CN); XU, Yang, Guangzhou (CN)
(74) Representative: Yip, Matthew Wing Yu

(56) References cited:
- EP-A1- 2 957 481
- CN-A- 112 071 110
- US-A1- 2017 144 654
- US-A1- 2019 054 927
- US-A1- 2020 298 837

## Description

### Field of Invention

The present invention relates to the technical field of intelligent vehicles, and in particular to a method and device for automatically parking a vehicle, a vehicle and a storage medium.

### Background

The development of electronic and electrical technology promotes higher intelligence of automobiles and enable more intelligent driving functions for the automobiles, bringing convenience to drivers. Especially, automatic parking systems used on a vehicle can not only help the driver to park quickly and safely, thereby reducing the driver's burden and reducing traffic accidents, but also effectively improve the intelligence level and increase added value for the automobiles, thereby bringing huge economic benefits.

A conventional automatic parking system preliminarily determines length and width of parking spaces, obstacles in the parking spaces and other information mainly according to visual frames, ultrasonic line segments, etc., so as to determine available candidate parking spaces, and then selects one candidate parking space for parking, so as to complete parking conveniently.

However, this solution still has a problem of inaccurate determination. For example, before and after determining candidate parking spaces, some unforeseen conditions may occur, resulting in failure in parking path generation for the determined candidate parking spaces. Sometimes a parking path cannot be generated for some parking spaces at first but can be generated later due to changes of road conditions. In such scenarios, because the parking spaces have not been determined as candidate parking spaces, they are accordingly ignored, resulting in failure of automatic parking and waste of available parking space resources.

US 2019/054927 A1 discusses a method of displaying parking assist information is used in a parking assist apparatus comprising a display and a control device. US 2017/144654 A1 discusses systems and methods for automatically parking a vehicle including receiving a request from a user to park a vehicle.

### Summary of Invention

In order to solve the above problem, in accordance with the present invention, there are provided a method for automatically parking a vehicle as recited by claim 1, a device for automatically parking a vehicle as recited by claim 6, a vehicle as recited by claim 8 and a storage medium as recited by claim 9. Preferred features are set out in the dependent claims.

The embodiments of the present invention include the following advantages:
first available parking spaces within the parking range are determined while the vehicle is traveling, first parking space position information of the first available parking spaces and first vehicle position information of the vehicle are acquired, candidate parking spaces are determined from the first available parking spaces based on the first parking space position information and the first vehicle position information, and are displayed on the vehicle terminal; second available parking spaces within the parking range and second vehicle position information of the vehicle are determined, the candidate parking spaces are updated based on the first parking space position information, the first vehicle position information, the second parking space position information of the second available parking spaces and the second vehicle position information, and the updated candidate parking spaces are displayed on the vehicle terminal. In the embodiments of the present invention, the candidate parking spaces are updated using the first parking space position information, the first vehicle position information, the second parking space position information of the second available parking spaces and the second vehicle position information, the available parking spaces within the parking range of the vehicle may be detected in real time, and the candidate parking spaces are updated in scenarios where the candidate parking spaces or available parking spaces that are not selected as candidate parking spaces change due to unforeseen factors, thereby avoiding waste of resources of available parking spaces, and improving a success rate of automatic parking.

### Brief Description of Drawings

Fig. 1 is a flow chart of steps of one embodiment of a method for automatically parking a vehicle of the present invention;
Fig. 2 is a flow chart of steps of another embodiment of a method for automatically parking a vehicle of the present invention;
Fig. 3 is a schematic diagram of parking space exploration of the present invention; and
Fig. 4 is a structural block diagram of one embodiment of a device for automatically parking a vehicle of the present invention.

### Detailed Description

To make the objectives, features, and advantages mentioned above of the present invention more apparent and easily understood, the present invention will be described in detail below with reference to the drawings and particular implementations.

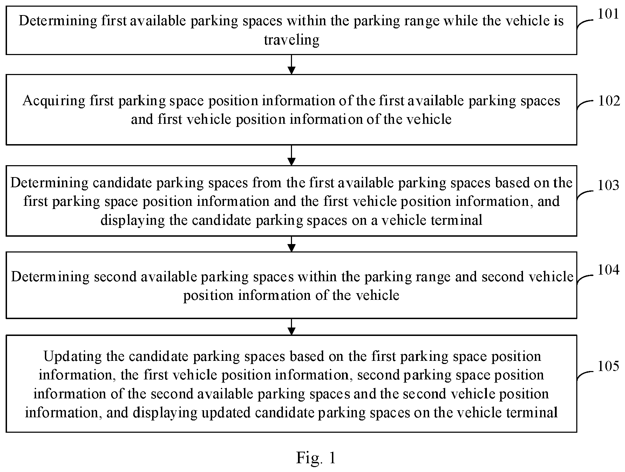

Fig. 1 illustrates a flow chart of steps of one embodiment of a method for automatically parking a vehicle of the present invention. The embodiment of the present invention may specifically include the following steps:
Step 101: determining first available parking spaces within a parking range while the vehicle is traveling,
where the parking range is a preset range within which the vehicle may be parked, and the vehicle may detect parking spaces within the range using a sensing device and a camera device; and the first available parking spaces are available parking spaces within the parking range, and the available parking spaces refer to parking spaces on which no vehicle is parked or there is no obstacle.

Specifically, while the vehicle is traveling, the vehicle may detect a parking space within the parking range of the vehicle, and determine whether there is an obstacle or vehicle on the parking space. If there is an obstacle or vehicle, it is determined that the parking space is an unavailable parking space, and if there is no obstacle or vehicle on the parking space, it is determined that the parking space is an available parking space, such that all the first available parking spaces within the parking range are determined.

Step 102: acquiring first parking space position information of the first available parking spaces and first vehicle position information of the vehicle.

The first parking space position information is coordinates of four corners of parking space frames of the available parking spaces, and the first vehicle position information is coordinates in which the current vehicle is located.

Specifically, after all the first available parking spaces within the parking range are determined, all the first available parking spaces within the parking range start to be polled, and when a certain first available parking space is polled, the first parking space position information of the first available parking space and the first vehicle position information of the vehicle at a current moment are acquired. In a specific application, when all the first available parking spaces within the parking range are polled, only one available parking space is planned in each period (100 ms) until all the available parking spaces within the parking range are polled.

Step 103: determining candidate parking spaces from the first available parking spaces based on the first parking space position information and the first vehicle position information, and displaying the candidate parking spaces on a vehicle terminal,
where the candidate parking spaces are the first available parking spaces in which parking paths are planned in polling, and may be displayed on the vehicle terminal, such as a large screen in the vehicle for a driver to select a candidate parking space.

Specifically, when a certain first available parking space within the parking range is polled, the first parking space position information of the first available parking space and the first vehicle position information of the vehicle at the current moment are acquired, and parking path planning for the first available parking space is carried out based on the first parking space position information, the first vehicle position information, the ambient information of the first available parking space and a road condition between the first available parking space and the vehicle. If there is a parking path planned, the first available parking space is determined as the candidate parking space, and the candidate parking space is displayed on the in-vehicle large screen.

Step 104: determining second available parking spaces within the parking range and second vehicle position information of the vehicle.

Specifically, after the available parking spaces within the parking range are polled for the first time, whether there is an obstacle or vehicle on a parking space within the parking range is detected again If there is an obstacle or vehicle, the parking space is an unavailable parking space, and if there is no obstacle or vehicle on the parking space, the parking space is determined as an available parking space, such that all the second available parking spaces within the parking range are determined. When a certain second available parking space is polled, the second vehicle position information of the vehicle and the second parking space position information of the parking space at the current moment are acquired.

It should be noted that while the vehicle is traveling, the parking range also moves along with movement of the vehicle. Accordingly, parking spaces within the parking range also change, and the candidate parking spaces disengaged from the parking range are canceled. For the same parking space, the position information of the same parking space detected by the vehicle at different positions also changes, that is, there may be a deviation between the first parking space position information and second parking space position information.

Step 105: updating the candidate parking spaces based on the first parking space position information, the first vehicle position information, the second parking space position information of the second available parking spaces and the second vehicle position information, and displaying updated candidate parking spaces on the vehicle terminal.

Specifically, when all the second available parking spaces within the parking range are determined, and a certain second available parking space is polled, after the second vehicle position information of the vehicle and the second parking space position information of the parking space at the current moment are acquired, the available parking spaces within the parking range are detected based on the first parking space position information, the first vehicle position information, the second parking space position information of the second available parking space and the second vehicle position information, the candidate parking spaces are updated according to a condition that the candidate parking spaces or the available parking spaces that have not been selected as candidate parking spaces are changed due to unforeseen factors, and the updated candidate parking spaces are displayed on the vehicle terminal.

To sum up, in the embodiment of the present invention, first available parking spaces within the parking range are determined while the vehicle is traveling, first parking space position information of the first available parking spaces and first vehicle position information of the vehicle are acquired, candidate parking spaces are determined from the first available parking spaces based on the first parking space position information and the first vehicle position information, and are displayed on the vehicle terminal, second available parking spaces within the parking range and second vehicle position information of the vehicle are determined, the candidate parking spaces are updated based on the first parking space position information, the first vehicle position information, the second parking space position information of the second available parking spaces and the second vehicle position information, and the updated candidate parking spaces are displayed on the vehicle terminal. In the embodiment of the present invention, the candidate parking spaces are updated based on the first parking space position information, the first vehicle position information, the second parking space position information of the second available parking spaces and the second vehicle position information, available parking spaces within the parking range of the vehicle may be detected in real time, and candidate parking spaces are updated according to a condition that the candidate parking spaces or available parking spaces that have not been selected as candidate parking spaces are changed due to unforeseen factors, thereby avoiding waste of resources of available parking spaces, and improving a success rate of automatic parking.

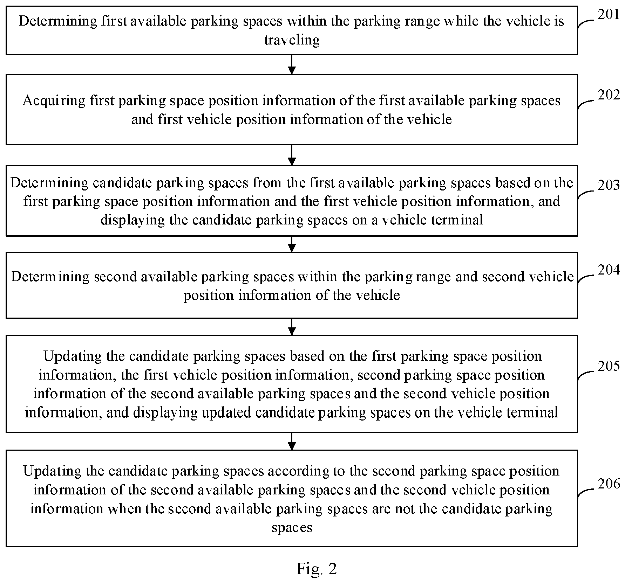

Fig. 2 illustrates a flow chart of steps of another embodiment of a method for automatically parking a vehicle. The embodiment of the present invention may specifically include the following steps:
Step 201: determining first available parking spaces within a parking range while the vehicle is traveling.
Step 202: acquiring first parking space position information of the first available parking spaces and first vehicle position information of the vehicle.
Step 203: determining candidate parking spaces from the first available parking spaces based on the first parking space position information and the first vehicle position information, and displaying the candidate parking spaces on a vehicle terminal.

In one embodiment of the present invention, said step of determining candidate parking spaces from the first available parking spaces based on the first parking space position information and the first vehicle position information includes: planning first parking paths corresponding to the first available parking spaces based on the first parking space position information and the first vehicle position information; and when the first parking paths are successfully planned, determining the first available parking spaces as the candidate parking spaces and recording the first vehicle position information as a track point.

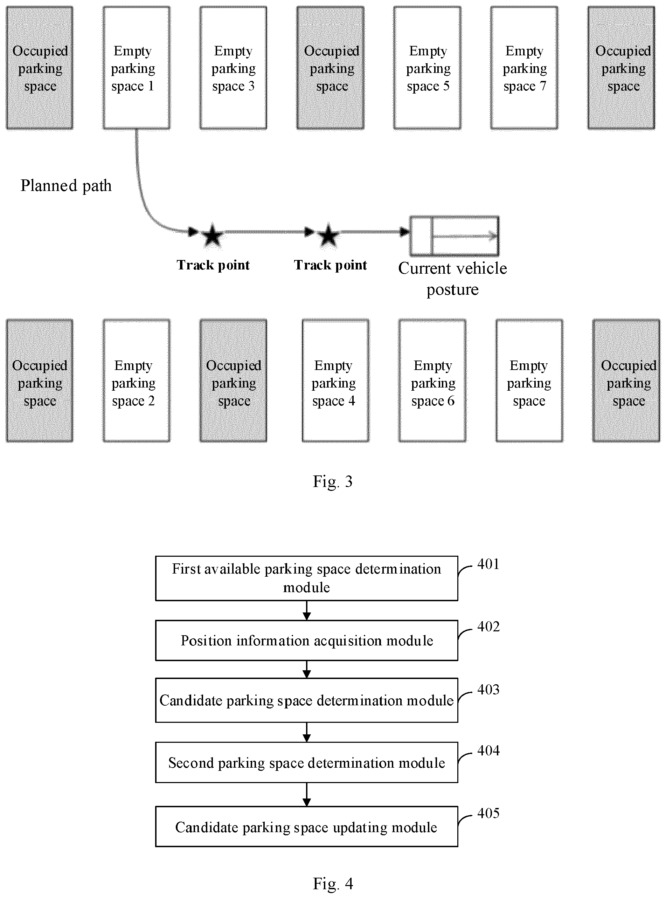

Specifically, when a certain first available parking space within the parking range is polled, after the first parking space position information of the first available parking space and the first vehicle position information of the vehicle at the current moment are acquired, the first parking path corresponding to the first available parking space is planned based on the first parking space position information, the first vehicle position information, ambient information of the first available parking space and the path condition between the first available parking space and the vehicle. When the first parking path is successfully planned, the first available parking space is determined as the candidate parking space, and the first vehicle position information is recorded as the track point. The track point recorded when the candidate parking spaces is determined is shown in Fig. 3.

Step 204: determining second available parking spaces within the parking range and second vehicle position information of the vehicle.

Step 205: updating the candidate parking spaces based on the first parking space position information, the first vehicle position information, second parking space position information of the second available parking spaces and the second vehicle position information when the second available parking spaces are the candidate parking spaces.

In one embodiment of the present invention, the first parking space position information includes first parking space entrance width, the second parking space position information includes second parking space entrance width, and the step of updating the candidate parking spaces based on the first parking space position information, the first vehicle position information, the second parking space position information of the second available parking spaces and the second vehicle position information when the second available parking spaces are the candidate parking spaces includes: determining whether a difference between the first parking space entrance width and the second parking space entrance width is lower than a preset threshold when the second available parking spaces are the candidate parking spaces; and when the difference between the first parking space entrance width and the second parking space entrance width is lower than the preset threshold, reserving the candidate parking spaces.

The parking space position information consists of coordinates of four corner points of parking space frames. The parking space entrance width may be obtained based on the coordinates of the four corner points. A deviation of the parking space position information may be observed when the vehicle is at different positions due to different angles of scanning of the same parking space. Thus, the acquired parking space entrance width may also change along with the movement of the vehicle. The preset threshold is a preset value of tolerance for acceptable changes of the parking space entrance width in a moving process of the vehicle, for example, 5 cm. Specifically, when a certain second available parking space is polled and the second available parking space is the candidate parking space, after the second vehicle position information of the vehicle and the second parking space position information of the parking space at the current moment are acquired, it is determined whether a difference between the first parking space entrance width and the second parking space entrance width is lower than the preset threshold. When the difference between the first parking space entrance width and the second parking space entrance width is lower than the preset threshold, it is determined that the candidate parking space is still valid, and the candidate parking space is reserved.

In one embodiment of the present invention, after the determining whether a difference between the first parking space entrance width and the second parking space entrance width is lower than a preset threshold, the method further includes: when the difference between the first parking space entrance width and the second parking space entrance width is higher than or equal to the preset threshold, planning second parking paths corresponding to the candidate parking spaces based on the track point and the second parking space position information of the second available parking spaces; when the second parking paths corresponding to the candidate parking spaces are successfully planned, reserving the candidate parking spaces; and when the second parking paths corresponding to the candidate parking spaces are unsuccessfully planned, cancelling the candidate parking spaces, taking the second available parking spaces as the first available parking spaces, the second parking space position information as the first parking space position information, and the second vehicle position information as the first vehicle position information, and returning to the step of determining candidate parking spaces from the first available parking spaces based on the first parking space position information and the first vehicle position information.

Specifically, after it has been determined whether the difference between the first parking stall entrance width and the second parking space entrance width is lower than the preset threshold, if the difference between the first parking space entrance width and the second parking space entrance width is higher than or equal to the preset threshold, that suggests that an unforeseen condition has occurred, e.g., an ambient condition or a parking path of the candidate parking space has changed. For example, another vehicle is or has been parked into the candidate parking space, an obstacle has been observed in the candidate parking space, or there is a vehicle, pedestrian or obstacle on path between the vehicle and the candidate parking space, such that the candidate parking space is no longer suitable for parking. Other candidate parking places need to be determined. Based on the first vehicle position information and the second parking space position information of the second available parking spaces, new candidate parking spaces are detected, second parking paths corresponding to the second available parking spaces are re-planned. When the second parking paths corresponding to the candidate parking spaces are successfully planned, it is determined that the candidate parking spaces are still valid, and the candidate parking spaces are reserved.

If planning of the second parking paths corresponding to the candidate parking spaces is unsuccessful, the candidate parking spaces are canceled, the second available parking spaces are taken as the first available parking spaces, the second parking space position information is taken as the first parking space position information, the second vehicle position information is taken as the first vehicle position information, and the step of determining candidate parking spaces from the first available parking spaces based on the first parking space position information and the first vehicle position information is performed again. That is, first parking paths corresponding to the first available parking spaces are planned based on the first parking space position information and the first vehicle position information, and when the first parking paths are successfully planned, the first available parking spaces are determined as the candidate parking spaces, and the first vehicle position information is recorded as the track point.

In the embodiment of the present invention, whether ambient conditions and conditions of the parking paths of the candidate parking spaces are in an unforeseen condition may be determined based on the deviation between the first parking space position information and the second parking space position information detected while the vehicle is traveling. If an unforeseen condition occurs, it is then determined whether the candidate parking spaces are still invalid, Candidate parking spaces that remain valid are reserved, and invalid candidate parking spaces are canceled, such that the candidate parking spaces detected by the vehicle are updated in real time, thereby reducing the probability of failure of automatic parking, and improving user experience of automatic parking.

Step 206: updating the candidate parking spaces based on the second parking space position information of the second available parking spaces and the second vehicle position information when the second available parking spaces are not the candidate parking spaces.

In one embodiment of the present invention, the step of updating the candidate parking spaces based on the second parking space position information of the second available parking spaces and the second vehicle position information when the second available parking spaces are not the candidate parking spaces includes: planning third parking paths corresponding to the second available parking spaces based on the second parking space position information of the second available parking spaces and the second vehicle position information when the second available parking spaces are not the candidate parking spaces; and when the third parking paths corresponding to the second available parking spaces are successfully planned and the number of the candidate parking spaces reaches the preset number, replacing the candidate parking spaces with the second available parking spaces, distances between the second available parking spaces and the vehicle being shorter than distances between the candidate parking spaces and the vehicle, and recording the second vehicle position information as the track point.

The preset number of the candidate parking spaces is the number of the available parking spaces that are preset to be used for recording the available parking spaces for which the parking paths can be generated, and the preset number of the candidate parking spaces may be set to be 4, 6, or 8, etc. Specifically, when the second available parking spaces are non-candidate parking spaces and a certain second available parking space is polled, after the second vehicle position information of the vehicle and the second parking space position information of the parking space at the current moment are acquired, the second available parking spaces are re-polled, the third parking paths corresponding to the second available parking spaces are planned based on the second parking space position information of the second available parking spaces and the second vehicle position information. When second available parking paths corresponding to the third available parking spaces of the non-candidate parking spaces are successfully planned and the preset number for the candidate parking spaces is not yet reached, the second available parking spaces are directly determined as the candidate parking spaces, and the second vehicle position information is recorded as the track point. When the preset number of the candidate parking spaces has been reached, it is determined that the second available parking spaces are pre-selected candidate parking spaces, and distances between the pre-selected candidate parking spaces and the vehicle are compared against distances between candidate parking spaces that have been recorded in the vehicle terminal and the vehicle. If the distances between the pre-selected candidate parking spaces and the vehicle are each shorter than the distances between the candidate parking spaces that have been recorded and the vehicle, the pre-selected candidate parking spaces are preferred candidate parking spaces, the candidate parking spaces that have been recorded are replaced with the second available parking spaces of the pre-selected candidate parking spaces, and the second vehicle position information is recorded as the track point. If the distances between the pre-selected candidate parking spaces and the vehicle are longer than or equal to the distances between the candidate parking spaces that have been recorded and the vehicle, the pre-selected candidate parking spaces are canceled.

In the embodiment of the present invention, polling is carried out on the second available parking spaces that have not been selected as the candidate parking spaces to determine the pre-selected candidate parking spaces. The pre-selected candidate parking spaces are compared with the candidate parking spaces that have been recorded to determine optimal candidate parking spaces from the pre-selected candidate parking spaces. The candidate parking spaces stored in the vehicle terminal are updated and/or replaced to prevent available parking spaces, for which parking paths can be suddenly generated due to ambient condition changes, from being ignored, such that the vehicle may detect more candidate parking spaces.

In one embodiment of the present invention, after the steps of determining candidate parking spaces from the first available parking spaces, and displaying the candidate parking spaces on a vehicle terminal, the method further includes: determining a target parking space from the candidate parking spaces in response to an operation instruction of a user for the vehicle terminal; acquiring third vehicle position information of the vehicle and third parking space position information of the target parking space; and planning a fourth parking path corresponding to the target parking space based on the third parking space position information and the third vehicle position information, and carrying out parking according to the fourth parking path.

Specifically, after the candidate parking spaces are determined and displayed on the vehicle terminal, the user may select one candidate parking space in the candidate parking spaces displayed on the vehicle terminal as a target parking space, acquire the third vehicle position information of the vehicle and the third parking space position information of the target parking space in real time, plan the fourth parking path corresponding to the target parking space based on the third parking space position information, the third vehicle position information and an ambient condition of the target parking space detected by the vehicle and the path, and carry out parking according to the fourth parking path.

In one embodiment of the present invention, the method further includes: when the fourth parking path is unsuccessfully planned, planning a fifth parking path corresponding to the target parking space based on the third vehicle position information, the track point and the third parking space position information, and carrying parking according to the fifth parking path.

Specifically, after planning of the fourth parking path corresponding to the target parking space is performed, if the fourth parking path is unsuccessfully planned, the fifth parking path corresponding to the target parking space is planned based on third vehicle position information, the track point and the third parking space position information, and parking is carried out according to the fifth parking path. If the fifth parking path is unsuccessfully planned, it is determined that the target parking space is invalid. Parking may not be carried out, the target parking space is canceled, and the step of target parking space confirmation is performed again. In the embodiment of the present invention, after the user confirms the target parking space, a formal parking path planning stage is entered, and the fourth parking path is planned based on the third parking space position information and the third vehicle position information that are acquired at the current moment. If the fourth parking path is unsuccessfully planned, the fifth parking path is planned according to the track point, If the fifth parking path is unsuccessfully planned, it is determined that parking may not be carried out on the candidate parking space. In the embodiment of the present invention, after target parking space confirmation, a plurality of parking paths are planned based on the vehicle position information and the parking space position information acquired in real time and the track point corresponding to the target parking space. An optimal parking path is then selected from the plurality of parking paths for execution, thereby improving a success rate of automatic parking of the vehicle.

It should be noted that in the embodiment of the present invention, only one track point is recorded in a process of determining the candidate parking spaces, but the present invention is not limited in this respect. Those skilled in the art may set the number of the recorded track points as two, three, four ... or another number according to the technical solution of the present invention without inventive efforts. For example, when it is assumed that the number of the track point is two, the vehicle position information during polling for the first time may be recorded as a first track point, the vehicle position information during polling for the second time may be recorded as a second track point, then the vehicle position information during polling for the third time may be updated as the second track point, and the second track point may be updated as the first track point.

In summary, in the embodiment of the present invention, first available parking spaces within a parking range are determined while a vehicle is traveling, first parking space position information of the first available parking spaces and first vehicle position information of the vehicle are acquired, candidate parking spaces are determined from the first available parking spaces based on the first parking space position information and the first vehicle position information, and are displayed on a vehicle terminal. Second available parking spaces within the parking range and second vehicle position information of the vehicle are determined. The candidate parking spaces are updated based on the first parking space position information, the first vehicle position information, the second parking space position information of the second available parking spaces and the second vehicle position information if the second available parking spaces are candidate parking spaces. The candidate parking spaces are updated based on the second parking space position information of the second available parking spaces and the second vehicle position information if the second available parking spaces are not candidate parking spaces. In the embodiment of the present invention, determination as to whether ambient conditions and conditions of the parking paths of the candidate parking spaces are in an unforeseen condition may be performed based on deviation between the first parking space position information and the second parking space position information detected while the vehicle is traveling. If an unforeseen condition occurs, the recorded candidate parking spaces are inspected, candidate parking spaces that remain valid are reserved, and invalid candidate parking spaces are canceled. In this way, candidate parking spaces stored in the vehicle terminal are updated in real time, thereby reducing the probability of failure of automatic parking, and improving user experience of automatic parking.

Polling is carried out on the second available parking spaces that are not selected as candidate parking spaces to determine pre-selected candidate parking spaces. The pre-selected candidate parking spaces are compared with the candidate parking spaces that have been recorded to determine optimal candidate parking spaces from the pre-selected candidate parking spaces, and the candidate parking spaces recorded in the vehicle terminal are updated and/or replaced to avoid an undesirable scenario where available parking spaces for which parking paths can be suddenly generated due to ambient changes are ignored, such that the vehicle may detect more candidate parking spaces.

After the user confirms a target parking space, a formal parking path planning stage is entered, a fourth parking path is planned based on the third parking space position information and the third vehicle position information that are acquired in real time. If planning of the fourth parking path is unsuccessful, a fifth parking path is planned according to the track point. If planning of the fifth parking path is unsuccessful, it is determined that parking may not be carried out on the candidate parking space. In the embodiment of the present invention, after the user confirms a target parking space, a plurality of parking paths are planned based on the vehicle position information and the parking space position information acquired in real time and the track point corresponding to the target parking space, and an optimal parking path is selected from the plurality of parking paths for execution, thereby improving a success rate of automatic parking of the vehicle.

It should be noted that method embodiments are expressed as combinations of a series of actions for simplicity of description, but it should be understood by those skilled in the art that the present invention is not limited by the order of the actions described, as some steps may be performed in other orders or concurrently in accordance with the embodiments of the present invention. Secondly, it should also be understood by those skilled in the art that the embodiments described in the description all belong to the preferred embodiments, and the actions involved are not necessarily required by the present invention.

Fig. 4 illustrates a structural block diagram of one embodiment of a device for automatically parking a vehicle of the present invention. In the embodiment of the present invention, the vehicle has a corresponding parking range. The device may specifically include the following modules:
a first available parking space determination module 401, configured to determine first available parking spaces within the parking range while the vehicle is traveling;
a position information acquisition module 402, configured to acquire first parking space position information of the first available parking spaces and first vehicle position information of the vehicle;
a candidate parking space determination module 403, configured to determine candidate parking spaces from the first available parking spaces based on the first parking space position information and the first vehicle position information, and display the candidate parking spaces on a vehicle terminal;
a second available parking space determination module 404, configured to determine second available parking spaces within the parking range and second vehicle position information of the vehicle; and
a candidate parking space updating module 405, configured to update the candidate parking spaces based on the first parking space position information, the first vehicle position information, second parking space position information of the second available parking spaces and the second vehicle position information, and display updated candidate parking spaces on the vehicle terminal.

In one embodiment of the present invention, the candidate parking space determination module 403 includes:
a first parking path planning sub-module, configured to plan first parking paths corresponding to the first available parking spaces based on the first parking space position information and the first vehicle position information; and
the candidate parking space determining sub-module, configured to determine the first available parking spaces as the candidate parking spaces and recording the first vehicle position information as a track point when the first parking paths are successfully planned.

In one embodiment of the present invention, the candidate parking space updating module 405 includes:
a first candidate parking space updating sub-module, configured to update the candidate parking spaces based on the first parking space position information, the first vehicle position information, second parking space position information of the second available parking spaces and the second vehicle position information when the second available parking spaces are the candidate parking spaces; and
a second candidate parking space updating sub-module, configured to update the candidate parking spaces based on the second parking space position information of the second available parking spaces and the second vehicle position information when the second available parking spaces are not the candidate parking spaces.

In one embodiment of the present invention, the first parking space position information includes first parking space entrance width, the second parking space position information includes second parking space entrance width, and the first candidate parking space updating sub-module includes:
a difference determination unit, configured to determine whether a difference between the first parking space entrance width and the second parking space entrance width is lower than a preset threshold when the second available parking spaces are the candidate parking spaces; and
a candidate parking space reserving unit, configured to reserve the candidate parking spaces when the difference between the first parking space entrance width and the second parking space entrance width is lower than the preset threshold.

In one embodiment of the present invention, the first candidate parking space updating sub-module further includes:
a second parking path planning unit, configured to plan second parking paths corresponding to the candidate parking spaces based on the track point and the second parking space position information of the second available parking spaces when the difference between the first parking space entrance width and the second parking space entrance width is higher than or equal to the preset threshold;
the candidate parking space reserving unit, configured to reserve the candidate parking spaces when the second parking paths corresponding to the candidate parking spaces are successfully planned; and
a candidate parking space cancellation unit, configured to cancel the candidate parking spaces, take the second available parking spaces as the first available parking spaces, the second parking space position information as the first parking space position information and the second vehicle position information as the first vehicle position information, and return to the step of determining candidate parking spaces from the first available parking spaces based on the first parking space position information and the first vehicle position information when the second parking paths corresponding to the candidate parking spaces are unsuccessfully planned.

In one embodiment of the present invention, the second candidate parking space updating sub-module includes:
a third parking path planning unit, configured to plan third parking paths corresponding to the second available parking spaces based on the second parking space position information of the second available parking spaces and the second vehicle position information when the second available parking spaces are not the candidate parking spaces;
a first candidate parking space determination unit, configured to determine the second available parking spaces as the candidate parking spaces and record the second vehicle position information as the track point when the third parking paths corresponding to the second available parking spaces are successfully planned and the number of the candidate parking spaces has not reached a preset number; and
a second candidate parking space determination unit, configured to replace the candidate parking spaces with the second available parking spaces and record the second vehicle position information as the track point when the third parking paths corresponding to the second available parking spaces are successfully planned and the number of the candidate parking spaces reaches the preset number, distances between the second available parking spaces and the vehicle being shorter than distances between the candidate parking spaces and the vehicle.

In one embodiment of the present invention, the device further includes:
a target parking space determination module, configured to determine a target parking space from the candidate parking spaces in response to an operation instruction of a user for a vehicle terminal;
a position information acquisition module, configured to acquire third vehicle position information of the vehicle and third parking space position information of the target parking space; and
a first parking module, configured to plan a fourth parking path corresponding to the target parking space based on the third parking space position information and the third vehicle position information, and carry out parking according to a fourth parking path.

In one embodiment of the present invention, the device further includes:
a second parking module, configured to plan a fifth parking path corresponding to the target parking space based on the third vehicle position information, the track point and the third parking space position information, and carry out parking according to the fifth parking path when the fourth parking path is unsuccessfully planned.

In summary, in the embodiment of the present invention, first available parking spaces within a parking range are determined while the vehicle is traveling, first parking space position information of the first available parking spaces and first vehicle position information of the vehicle are acquired, and candidate parking spaces are determined from the first available parking spaces based on the first parking space position information and the first vehicle position information, and are displayed on a vehicle terminal. Second available parking spaces within the parking range and second vehicle position information of the vehicle are determined, the candidate parking spaces are updated based on the first parking space position information, the first vehicle position information, the second parking space position information of the second available parking spaces and the second vehicle position information, and the updated candidate parking spaces are displayed on the vehicle terminal. The candidate parking spaces may be updated based on the first parking space position information, the first vehicle position information, the second parking space position information of the second available parking spaces and the second vehicle position information. Available parking spaces within the parking range of the vehicle may be detected in real time, and the candidate parking spaces may be updated in scenarios where the candidate parking spaces or available parking spaces that are not selected as candidate parking spaces change due to unforeseen factors, thereby avoiding waste of resources of available parking spaces, and improving a success rate of automatic parking.

Since the embodiment of the device is largely in accordance with the embodiment of the method, its description is relatively simple, and relevant content may be seen from partial description of the embodiment of the method.

The present invention further provides a vehicle. The vehicle includes a processor, a memory and a computer program that is stored on the memory and may run on the processor, where the computer program, when executed by the processor, results in performance of the steps of the above method for automatically parking a vehicle.

The present invention further provides a computer readable storage medium. The computer readable storage medium stores a computer program, and the computer program, when executed by a processor, results in performance of the steps of the above method for automatically parking a vehicle.

Each embodiment of the description is described in a progressive manner, each embodiment focuses on the differences from other embodiments, and the same and similar parts between the embodiments may refer to each other.

Those skilled in the art should understand that embodiments of the present invention may be provided as a method, a device, or a computer program product. Therefore, the embodiments of the present invention may take the form of hardware only embodiments, software only embodiments, or embodiments with a combination of software and hardware. Moreover, the embodiments of the present invention may take the form of a computer program product that is implemented on one or more computer-usable storage medium (including but not limited to a disk memory, a CD-ROM, an optical memory, etc.) that include computer-usable program codes. The embodiments of the present invention are described with reference to the flow charts and/or block diagrams of the method, a terminal device (system), and the computer program product according to the embodiments of the present invention. It should be understood that each flow and/or block in the flow diagrams and/or block diagrams and combinations of the flows and/or blocks in the flow diagrams and/or block diagrams may be implemented by computer program instructions. These computer program instructions may be provided for a general-purpose computer, a special-purpose computer, an embedded processor, or a processor of another programmable data processing terminal device to generate a machine, such that the instructions executed by a computer or a processor of another programmable data processing terminal device generate an apparatus for implementing a specific function in one or more processes in the flowcharts and/or in one or more blocks in the block diagrams.

These computer program instructions may be stored in a computer readable memory that may instruct the computer or another programmable data processing terminal device to work in a specific manner, such that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing terminal device, such that a series of operations and steps are executed on the computer or another programmable terminal device, thereby generating computer-implemented processing. Therefore, the instructions executed on the computer or another programmable terminal device provide steps for implementing a specific function in one or more processes in the flow charts and/or in one or more blocks in the block diagrams.

Although the preferred embodiments of the present invention have been described, those skilled in the art may make additional changes and modifications to these embodiments once they learn the basic inventive concept. Therefore, the appended claims are intended to be interpreted as including the preferred embodiments and all changes and modifications falling within the scope of the claims.

Finally, it should be noted that relational terms herein such as first and second are only used to distinguish one entity or operation from another entity or operation without necessarily requiring or implying any actual such relationship or order between such entities or operations. Moreover, terms "include", "contain", or any other variations thereof are intended to cover non-exclusive inclusions, such that a process, a method, an article, or a terminal device including a series of elements not only includes those elements, but also includes other elements that are not explicitly listed, or also includes inherent elements of the process, the method, the article, or the terminal device. Without more restrictions, the elements defined by the sentence "including a..." do not exclude the existence of other identical elements in the process, method, article, or terminal device including the elements.

The method and device for automatically parking a vehicle, the vehicle and the storage medium provided in the present invention are introduced in detail above. Specific embodiments are used herein for illustration of the principles and implementations of the present disclosure. The description of the above embodiments is merely used to help understand the method and its core concept of the present disclosure. In addition, a common person skilled in the art may make modifications to the specific implementations and application scope in accordance with the concept of the present disclosure. To sum up, the content of this description should not be construed as a limitation to the present invention.

## Claims

1. A method for automatically parking a vehicle, wherein the vehicle has a corresponding parking range, the method **characterized by**:
determining (101, 201) first available parking spaces within the parking range while the vehicle is traveling;
acquiring (102, 202) first parking space position information of the first available parking spaces and first vehicle position information of the vehicle;
determining (103, 203) candidate parking spaces from the first available parking spaces based on the first parking space position information and the first vehicle position information, and displaying the candidate parking spaces on a vehicle terminal;
determining (104, 204) second available parking spaces within the parking range and second vehicle position information of the vehicle; and
updating (105, 205) the candidate parking spaces, and displaying updated candidate parking spaces on the vehicle terminal;
wherein said determining (103, 203) candidate parking spaces from the first available parking spaces based on the first parking space position information and the first vehicle position information comprises:
planning first parking paths corresponding to the first available parking spaces based on the first parking space position information and the first vehicle position information; and
determining the first available parking spaces as the candidate parking spaces and recording the first vehicle position information as a track point when the first parking paths are successfully planned;
wherein said updating (105, 205) the candidate parking spaces comprises:
updating the candidate parking spaces based on the first parking space position information, the first vehicle position information, the second parking space position information of the second available parking spaces and the second vehicle position information when the second available parking spaces are the candidate parking spaces; and
updating (206) the candidate parking spaces based on the second parking space position information of the second available parking spaces and the second vehicle position information when the second available parking spaces are not the candidate parking spaces; and
wherein the first parking space position information comprises a first detected parking space entrance width of one of the first available parking spaces, the second parking space position information comprises a second detected parking space entrance width of one of the second available parking spaces corresponding to said one of the first available parking spaces, and
wherein said updating the candidate parking spaces based on the first parking space position information, the first vehicle position information, the second parking space position information of the second available parking spaces and the second vehicle position information when the second available parking spaces are the candidate parking spaces comprises:
determining whether a difference between the first detected parking space entrance width and the second detected parking space entrance width is lower than a preset threshold when said one of the second available parking spaces is one of the candidate parking spaces; and, when said difference is lower than the preset threshold, maintaining said one of the second available parking spaces as the one of the candidate parking spaces.

2. The method according to claim 1, further comprising, after said determining whether a difference between the first detected parking space entrance width and the second detected parking space entrance width is lower than a preset threshold:
when said difference is higher than or equal to the preset threshold, planning second parking paths corresponding to the candidate parking spaces based on the track point and the second parking space position information of the second available parking spaces;
when the second parking paths corresponding to the candidate parking spaces are successfully planned:
maintaining the candidate parking spaces; and
when the second parking paths corresponding to the candidate parking spaces are not successfully planned:
cancelling the candidate parking spaces, taking the second available parking spaces as the first available parking spaces, the second parking space position information as the first parking space position information, and the second vehicle position information as the first vehicle position information, and returning to the step (103, 203) of determining candidate parking spaces from the first available parking spaces based on the first parking space position information and the first vehicle position information.

3. The method according to claim 1, wherein said updating the candidate parking spaces based on the second parking space position information of the second available parking spaces and the second vehicle position information when the second available parking spaces are not the candidate parking spaces comprises:
planning third parking paths corresponding to the second available parking spaces based on the second parking space position information of the second available parking spaces and the second vehicle position information when the second available parking spaces are not the candidate parking spaces;
determining the second available parking spaces as the candidate parking spaces, and recording the second vehicle position information as the track point when the third parking paths corresponding to the second available parking spaces are successfully planned and the number of the candidate parking spaces has not reached a preset number; and
when the third parking paths corresponding to the second available parking spaces are successfully planned and the number of the candidate parking spaces reaches the preset number, replacing the candidate parking spaces with the second available parking spaces, distances between the second available parking spaces and the vehicle being shorter than distances between the candidate parking spaces and the vehicle, and recording the second vehicle position information as the track point.

4. The method according to claim 1, further comprising, after said determining candidate parking spaces from the first available parking spaces, and displaying the candidate parking spaces on a vehicle terminal:
determining a target parking space from the candidate parking spaces in response to an operation instruction of a user for the vehicle terminal;
acquiring third vehicle position information of the vehicle and third parking space position information of the target parking space; and
planning a fourth parking path corresponding to the target parking space based on the third parking space position information and the third vehicle position information, and carrying out parking according to the fourth parking path.

5. The method according to claim 4, further comprising:
planning a fifth parking path corresponding to the target parking space based on the third vehicle position information, the track point and the third parking space position information, and carrying parking according to the fifth parking path when the fourth parking path is not successfully planned.

6. A device for automatically parking a vehicle, wherein the vehicle has a corresponding parking range, and the device **characterized by**:
a first available parking space determination module (401), configured to determine first available parking spaces within the parking range while the vehicle is traveling;
a position information acquisition module (402), configured to acquire first parking space position information of the first available parking spaces and first vehicle position information of the vehicle;
a candidate parking space determination module (403), configured to determine candidate parking spaces from the first available parking spaces based on the first parking space position information and the first vehicle position information, and display the candidate parking spaces on a vehicle terminal;
a second parking space determination module (404), configured to determine second available parking spaces within the parking range and second vehicle position information of the vehicle; and
a candidate parking space updating module (405), configured to update the candidate parking spaces, and display updated candidate parking spaces on the vehicle terminal;
wherein the candidate parking space determination module is further configured to:
plan first parking paths corresponding to the first available parking spaces based on the first parking space position information and the first vehicle position information; and
determine the first available parking spaces as the candidate parking spaces and record the first vehicle position information as a track point when the first parking paths are successfully planned;
wherein the candidate parking space updating module is further configured to:
update the candidate parking spaces based on the first parking space position information, the first vehicle position information, the second parking space position information of the second available parking spaces and the second vehicle position information when the second available parking spaces are the candidate parking spaces; and
update the candidate parking spaces based on the second parking space position information of the second available parking spaces and the second vehicle position information when the second available parking spaces are not the candidate parking spaces;
wherein the first parking space position information comprises a first detected parking space entrance width of one of the first available parking spaces, the second parking space position information comprises a second detected parking space entrance width of one of the second available parking spaces corresponding to said one of the first available parking spaces, and
wherein the candidate parking space updating module is further configured to:
determine whether a difference between the first detected parking space entrance width and the second detected parking space entrance width is lower than a preset threshold when said one of the second available parking spaces is one of the candidate parking spaces; and, when said difference is lower than the preset threshold, maintain said one of the second available parking spaces as the one of the candidate parking spaces.

7. The device according to claim 6, further comprising:
means for planning second parking paths corresponding to the candidate parking spaces based on the track point and the second parking space position information of the second available parking spaces when the difference between the first detected parking space entrance width and the second detected parking space entrance width is higher than or equal to the preset threshold;
means for maintaining the candidate parking spaces when the second parking paths corresponding to the candidate parking spaces are successfully planned;
means for, when the second parking paths corresponding to the candidate parking spaces are not successfully planned, cancelling the candidate parking spaces, taking the second available parking spaces as the first available parking spaces, the second parking space position information as the first parking space position information, and the second vehicle position information as the first vehicle position information, and returning to performance of determination of candidate parking spaces from the first available parking spaces based on the first parking space position information and the first vehicle position information.

8. A vehicle, comprising a processor and memory, the memory comprising a computer program stored thereon which, when executed by the processor, results in performance of the steps of the method for automatically parking a vehicle of any one of claims 1 to 5.

9. A computer readable storage medium, comprising a computer program stored thereon which, when executed by a processor, results in performance of the steps of the method for automatically parking a vehicle of any one of claims 1 to 5.

## Patentansprüche

1. Verfahren zum automatischen Parken eines Fahrzeugs, wobei das Fahrzeug einen entsprechenden Parkbereich hat, wobei das Verfahren **gekennzeichnet ist durch**:
Bestimmen (101, 201) von ersten verfügbaren Parkplätzen innerhalb des Parkbereichs, während das Fahrzeug fährt;
Erfassen (102, 202) von ersten Parkplatzpositionsinformationen der ersten verfügbaren Parkplätze und von ersten Fahrzeugpositionsinformationen des Fahrzeugs;
Bestimmen (103, 203) von Kandiatenparkplätzen aus den ersten verfügbaren Parkplätzen auf der Basis der ersten Parkplatzpositionsinformationen und der ersten Fahrzeugpositionsinformationen, und Anzeigen der Kandidatenparkplätze auf einem Fahrzeugterminal;
Bestimmen (104, 204) von zweiten verfügbaren Parkplätzen innerhalb des Parkbereichs und von zweiten Fahrzeugpositionsinformationen des Fahrzeugs; und
Aktualisieren (105, 205) der Kandidatenparkplätze und Anzeigen von aktualisierten Kandidatenparkplätzen auf dem Fahrzeugterminal;
wobei das genannte Bestimmen (103, 203) von Kandidatenparkplätzen aus den ersten verfügbaren Parkplätzen auf der Basis der ersten Parkplatzpositionsinformationen und der ersten Fahrzeugpositionsinformationen Folgendes beinhaltet:
Planen von ersten Parkwegen entsprechend den ersten verfügbaren Parkplätzen auf der Basis der ersten Parkplatzpositionsinformationen und der ersten Fahrzeugpositionsinformationen; und
Bestimmen der ersten verfügbaren Parkplätze als die Kandidatenparkplätze und Aufzeichnen der ersten Fahrzeugpositionsinformationen als einen Spurpunkt, wenn die ersten Parkwege erfolgreich geplant sind;
wobei das genannte Aktualisieren (105, 205) der Kandidatenparkplätze Folgendes beinhaltet:
Aktualisieren der Kandidatenparkplätze auf der Basis der ersten Parkplatzpositionsinformationen, der ersten Fahrzeugpositionsinformationen, der zweiten Parkplatzpositionsinformationen der zweiten verfügbaren Parkplätze und der zweiten Fahrzeugpositionsinformationen, wenn die zweiten verfügbaren Parkplätze die Kandidatenparkplätze sind; und
Aktualisieren (206) der Kandidatenparkplätze auf der Basis der zweiten Parkplatzpositionsinformationen der zweiten verfügbaren Parkplätze und der zweiten Fahrzeugpositionsinformationen, wenn die zweiten verfügbaren Parkplätze nicht die Kandidatenparkplätze sind; und
wobei die ersten Parkplatzpositionsinformationen eine erste erkannte Parkplatzeinfahrtsbreite von einem der ersten verfügbaren Parkplätze umfassen, die zweiten Parkplatzpositionsinformationen eine zweite erkannte Parkplatzeinfahrtsbreite von einem der zweiten verfügbaren Parkplätze entsprechend dem genannten einen der ersten verfügbaren Parkplätze umfassen, und
wobei das genannte Aktualisieren der Kandidatenparkplätze auf der Basis der ersten Parkplatzpositionsinformationen, der ersten Fahrzeugpositionsinformationen, der zweiten Parkplatzpositionsinformationen der zweiten verfügbaren Parkplätze und der zweiten Fahrzeugpositionsinformationen, wenn die zweiten verfügbaren Parkplätze die Kandidatenparkplätze sind, Folgendes beinhaltet:
Feststellen, ob eine Differenz zwischen der ersten erkannten Parkplatzeinfahrtsbreite und der zweiten erkannten Parkplatzeinfahrtsbreite kleiner als ein voreingestellter Schwellenwert ist, wenn der genannte eine der zweiten verfügbaren Parkplätze einer der Kandidatenparkplätze ist; und Beibehalten, wenn die genannte Differenz kleiner als der voreingestellte Schwellenwert ist, des genannten einen der zweiten verfügbaren Parkplätze als den einen der Kandidatenparkplätze.

2. Verfahren nach Anspruch 1, das ferner, nach dem genannten Feststellen, ob eine Differenz zwischen der ersten erkannten Parkplatzeinfahrtsbreite und der zweiten erkannten Parkplatzeinfahrtsbreite kleiner als ein voreingestellter Schwellenwert ist, Folgendes beinhaltet:
Planen, wenn die genannte Differenz genauso groß wie oder größer als der voreingestellte Schwellenwert ist, von zweiten Parkwegen entsprechend den Kandidatenparkplätzen auf der Basis des Spurpunkts und der zweiten Parkplatzpositionsinformationen der zweiten verfügbaren Parkplätze;
wenn die zweiten Parkwege entsprechend den Kandidatenparkplätzen erfolgreich geplant sind:
Beibehalten der Kandidatenparkplätze; und
wenn die zweiten Parkwege entsprechend den Kandidatenparkplätzen nicht erfolgreich geplant sind:
Stornieren der Kandidatenparkplätze, Nehmen der zweiten verfügbaren Parkplätze als die ersten verfügbaren Parkplätze, der zweiten Parkplatzpositionsinformationen als die ersten Parkplatzpositionsinformationen und der zweiten Fahrzeugpositionsinformationen als die ersten Fahrzeugpositionsinformationen, und Zurückkehren zu dem Schritt (103, 203) des Bestimmens von Kandidatenparkplätzen aus den ersten verfügbaren Parkplätzen auf der Basis der ersten Parkplatzpositionsinformationen und der ersten Fahrzeugpositionsinformationen.

3. Verfahren nach Anspruch 1, wobei das genannte Aktualisieren der Kandidatenparkplätze auf der Basis der zweiten Parkplatzpositionsinformationen der zweiten verfügbaren Parkplätze und der zweiten Fahrzeugpositionsinformationen, wenn die zweiten verfügbaren Parkplätze nicht die Kandidatenparkplätze sind, Folgendes beinhaltet:
Planen von dritten Parkwegen entsprechend den zweiten verfügbaren Parkplätzen auf der Basis der zweiten Parkplatzpositionsinformationen der zweiten verfügbaren Parkplätze und der zweiten Fahrzeugpositionsinformationen, wenn die zweiten verfügbaren Parkplätze nicht die Kandidatenparkplätze sind;
Bestimmen der zweiten verfügbaren Parkplätze als die Kandidatenparkplätze und Aufzeichnen der zweiten Fahrzeugpositionsinformationen als den Spurpunkt, wenn die dritten Parkwege entsprechend den zweiten verfügbaren Parkplätzen erfolgreich geplant sind und die Anzahl der Kandidatenparkplätze eine voreingestellte Anzahl nicht erreicht hat; und
Ersetzen, wenn die dritten Parkwege entsprechend den zweiten verfügbaren Parkplätzen erfolgreich geplant sind und die Anzahl der Kandidatenparkplätze die voreingestellte Anzahl erreicht, der Kandidatenparkplätze durch die zweiten verfügbaren Parkplätze, wobei Abstände zwischen den zweiten verfügbaren Parkplätzen und dem Fahrzeug kürzer sind als Abstände zwischen den Kandidatenparkplätzen und dem Fahrzeug, und Aufzeichnen der zweiten Fahrzeugpositionsinformationen als Spurpunkt.

4. Verfahren nach Anspruch 1, das ferner, nach dem genannten Bestimmen von Kandidatenparkplätzen aus den ersten verfügbaren Parkplätzen und dem Anzeigen der Kandidatenparkplätze auf einem Fahrzeugterminal, Folgendes beinhaltet:
Bestimmen eines Zielparkplatzes aus den Kandidatenparkplätzen als Reaktion auf eine Betriebsanweisung eines Benutzers für das Fahrzeugterminal;
Erfassen dritter Fahrzeugpositionsinformationen des Fahrzeugs und dritter Parkplatzpositionsinformationen des Zielparkplatzes; und
Planen eines vierten Parkwegs entsprechend dem Zielparkplatz auf der Basis der dritten Parkplatzpositionsinformationen und der dritten Fahrzeugpositionsinformationen und Ausführen des Parkens gemäß dem vierten Parkweg.

5. Verfahren nach Anspruch 4, das ferner Folgendes beinhaltet:
Planen eines fünften Parkwegs entsprechend dem Zielparkplatz auf der Basis der dritten Fahrzeugpositionsinformationen, des Spurpunkts und der dritten Parkplatzpositionsinformationen, und Durchführen des Parkens gemäß dem fünften Parkweg, wenn der vierte Parkweg nicht erfolgreich geplant ist.

6. Gerät zum automatischen Parken eines Fahrzeugs, wobei das Fahrzeug einen entsprechenden Parkbereich hat, und das Gerät **gekennzeichnet ist durch**:
ein Erster-Verfügbarer-Parkplatz-Bestimmungsmodul (401), das zum Bestimmen von ersten verfügbaren Parkplätzen innerhalb des Parkbereichs konfiguriert ist, während das Fahrzeug fährt;
ein Positionsinformationserfassungsmodul (402), das zum Erfassen von ersten Parkplatzpositionsinformationen der ersten verfügbaren Parkplätze und von ersten Fahrzeugpositionsinformationen des Fahrzeugs konfiguriert ist;
ein Kandidatenparkplatz-Bestimmungsmodul (403), das zum Bestimmen von Kandidatenparkplätzen aus den ersten verfügbaren Parkplätzen auf der Basis der ersten Parkplatzpositionsinformationen und der ersten Fahrzeugpositionsinformationen und zum Anzeigen der Kandidatenparkplätze auf einem Fahrzeugterminal konfiguriert ist;
ein Zweiter-Parkplatz-Bestimmungsmodul (404), das zum Bestimmen von zweiten verfügbaren Parkplätzen innerhalb des Parkbereichs und von zweiten Fahrzeugpositionsinformationen des Fahrzeugs konfiguriert ist; und
ein Kandidatenparkplatz-Aktualisierungsmodul (405), das zum Aktualisieren der Kandidatenparkplätze und zum Anzeigen von aktualisierten Kandidatenparkplätzen auf dem Fahrzeugterminal konfiguriert ist;
wobei das Kandidatenparkplatz-Bestimmungsmodul ferner konfiguriert ist zum:
Planen von ersten Parkwegen entsprechend den ersten verfügbaren Parkplätzen auf der Basis der ersten Parkplatzpositionsinformationen und der ersten Fahrzeugpositionsinformationen; und
Bestimmen der ersten verfügbaren Parkplätze als die Kandidatenparkplätze und Aufzeichnen der ersten Fahrzeugpositionsinformationen als einen Spurpunkt, wenn die ersten Parkwege erfolgreich geplant sind;
wobei das Kandidatenparkplatz-Aktualisierungsmodul ferner konfiguriert ist zum:
Aktualisieren der Kandidatenparkplätze auf der Basis der ersten Parkplatzpositionsinformationen, der ersten Fahrzeugpositionsinformationen, der zweiten Parkplatzpositionsinformationen der zweiten verfügbaren Parkplätze und der zweiten Fahrzeugpositionsinformationen, wenn die zweiten verfügbaren Parkplätze die Kandidatenparkplätze sind; und
Aktualisieren der Kandidatenparkplätze auf der Basis der zweiten Parkplatzpositionsinformationen der zweiten verfügbaren Parkplätze und der zweiten Fahrzeugpositionsinformationen, wenn die zweiten verfügbaren Parkplätze nicht die Kandidatenparkplätze sind;
wobei die ersten Parkplatzpositionsinformationen eine erste erkannte Parkplatzeinfahrtsbreite von einem der ersten verfügbaren Parkplätze umfassen, die zweiten Parkplatzpositionsinformationen eine zweite erkannte Parkplatzeinfahrtsbreite von einem der zweiten verfügbaren Parkplätze entsprechend dem genannten einen der ersten verfügbaren Parkplätze umfassen, und
wobei das Kandidatenparkplatz-Aktualisierungsmodul ferner konfiguriert ist zum:
Feststellen, ob eine Differenz zwischen der ersten erkannten Parkplatzeinfahrtsbreite und der zweiten erkannten Parkplatzeinfahrtsbreite kleiner als ein voreingestellter Schwellenwert ist, wenn der genannte eine der zweiten verfügbaren Parkplätze einer der Kandidatenparkplätze ist; und Beibehalten, wenn die gennante Differenz kleiner als der voreingestellte Schwellenwert ist, des genannten einen der zweiten verfügbaren Parkplätze als den einen der Kandidatenparkplätze.

7. Gerät nach Anspruch 6, das ferner Folgendes umfasst:
Mittel zum Planen von zweiten Parkwegen entsprechend den Kandidatenparkplätzen auf der Basis des Spurpunkts und der zweiten Parkplatzpositionsinformationen der zweiten verfügbaren Parkplätze, wenn die Differenz zwischen der ersten erkannten Parkplatzeinfahrtsbreite und der zweiten erkannten Parkplatzeinfahrtsbreite genauso groß wie oder größer als der voreingestellte Schwellenwert ist;
Mittel zum Beibehalten der Kandidatenparkplätze, wenn die zweiten Parkwege entsprechend den Kandidatenparkplätzen erfolgreich geplant sind;
Mittel zum Stornieren, wenn die zweiten Parkwege entsprechend den Kandidatenparkplätzen nicht erfolgreich geplant sind, der Kandidatenparkplätze, Nehmen der zweiten verfügbaren Parkplätze als die ersten verfügbaren Parkplätze, der zweiten Parkplatzpositionsinformationen als die ersten Parkplatzpositionsinformationen und der zweiten Fahrzeugpositionsinformationen als die ersten Fahrzeugpositionsinformationen, und Zurückkehren zur Durchführung des Bestimmens von Kandidatenparkplätzen aus den ersten verfügbaren Parkplätzen auf der Basis der ersten Parkplatzpositionsinformationen und der ersten Fahrzeugpositionsinformationen.

8. Fahrzeug, das einen Prozessor und einen Speicher umfasst, wobei der Speicher ein darauf gespeichertes Computerprogramm umfasst, das bei Ausführung durch den Prozessor zur Durchführung der Schritte des Verfahrens zum automatischen Parken eines Fahrzeugs nach einem der Ansprüche 1 bis 5 führt.

9. Computerlesbares Speichermedium mit einem darauf gespeicherten Computerprogramm, das bei Ausführung durch einen Prozessor zur Durchführung der Schritte des Verfahrens zum automatischen Einparken eines Fahrzeugs nach einem der Ansprüche 1 bis 5 führt.

## Revendications

1. Procédé de stationnement automatique d'un véhicule, dans lequel le véhicule présente une zone de stationnement correspondante, le procédé **caractérisé par** :
une détermination (101, 201) de premiers emplacements de stationnement disponibles au sein de la zone de stationnement tandis que le véhicule se déplace ;
une acquisition (102, 202) de premières informations de position d'emplacement de stationnement des premiers emplacements de stationnement disponibles et de premières informations de position de véhicule du véhicule ;
une détermination (103, 203) d'emplacements de stationnement candidats à partir des premiers emplacements de stationnement disponibles sur la base des premières informations de position d'emplacement de stationnement et des premières informations de position de véhicule, et un affichage des emplacements de stationnement candidats sur un terminal de véhicule ;
une détermination (104, 204) de seconds emplacements de stationnement disponibles au sein de la zone de stationnement et de deuxièmes informations de position de véhicule du véhicule ; et
une mise à jour (105, 205) des emplacements de stationnement candidats, et un affichage d'emplacements de stationnement candidats mis à jour sur le terminal de véhicule ;
dans lequel ladite détermination (103, 203) d'emplacements de stationnement candidats à partir des premiers emplacements de stationnement disponibles sur la base des premières informations de position d'emplacement de stationnement et des premières informations de position de véhicule comprend :
une planification de premières trajectoires de stationnement correspondant aux premiers emplacements de stationnement disponibles sur la base des premières informations de position d'emplacement de stationnement et des premières informations de position de véhicule ; et
une détermination des premiers emplacements de stationnement disponibles à titre d'emplacements de stationnement candidats et un enregistrement des premières informations de position de véhicule à titre de point d'itinéraire lorsque les premières trajectoires de stationnement sont planifiées avec succès ;
dans lequel ladite mise à jour (105, 205) des emplacements de stationnement candidats comprend :
une mise à jour des emplacements de stationnement candidats sur la base des premières informations de position d'emplacement de stationnement, des premières informations de position de véhicule, des deuxièmes informations de position d'emplacement de stationnement des seconds emplacements de stationnement disponibles et des deuxièmes informations de position de véhicule lorsque les seconds emplacements de stationnement disponibles sont les emplacements de stationnement candidats ; et
une mise à jour (206) des emplacements de stationnement candidats sur la base des deuxièmes informations de position d'emplacement de stationnement des seconds emplacements de stationnement disponibles et des deuxièmes informations de position de véhicule lorsque les seconds emplacements de stationnement disponibles ne sont pas les emplacements de stationnement candidats ; et
dans lequel les premières informations de position d'emplacement de stationnement comprennent une première largeur d'entrée d'emplacement de stationnement détecté d'un des premiers emplacements de stationnement disponibles, les deuxièmes informations de position d'emplacement de stationnement comprennent une seconde largeur d'entrée d'emplacement de stationnement détecté d'un des seconds emplacements de stationnement disponibles correspondant audit un des premiers emplacements de stationnement disponibles ; et
dans lequel ladite mise à jour des emplacements de stationnement candidats sur la base des premières informations de position d'emplacement de stationnement, des premières informations de position de véhicule, des deuxièmes informations de position d'emplacement de stationnement des seconds emplacements de stationnement disponibles et des deuxièmes informations de position de véhicule lorsque les seconds emplacements de stationnement disponibles sont les emplacements de stationnement candidats comprend :
une détermination du fait qu'un écart entre la première largeur d'entrée d'emplacement de stationnement détecté et la seconde largeur d'entrée d'emplacement de stationnement détecté est inférieur ou non à un seuil prédéfini lorsque ledit un des seconds emplacements de stationnement disponibles est un des emplacements de stationnement candidats ; et, lorsque ledit écart est inférieur au seuil prédéfini, un maintien dudit un des seconds emplacements de stationnement disponibles à titre de l'un des emplacements de stationnement candidats.

2. Procédé selon la revendication 1, comprenant en outre, après ladite détermination du fait qu'un écart entre la première largeur d'entrée d'emplacement de stationnement détecté et la seconde largeur d'entrée d'emplacement de stationnement détecté est inférieur ou non à un seuil prédéfini :
lorsque ledit écart est supérieur ou égal au seuil prédéfini, une planification de deuxièmes trajectoires de stationnement correspondant aux emplacements de stationnement candidats sur la base du point d'itinéraire et des deuxièmes informations de position d'emplacement de stationnement des seconds emplacements de stationnement disponibles ;
lorsque les deuxièmes trajectoires de stationnement correspondant aux emplacements de stationnement candidats sont planifiées avec succès :
un maintien des emplacements de stationnement candidats ; et
lorsque les deuxièmes trajectoires de stationnement correspondant aux emplacements de stationnement candidats ne sont pas planifiées avec succès :
une annulation des emplacements de stationnement candidats, une considération des seconds emplacements de stationnement disponibles à titre de premiers emplacements de stationnement disponibles, des deuxièmes informations de position d'emplacement de stationnement à titre de premières informations de position d'emplacement de stationnement, et des deuxièmes informations de position de véhicule à titre de premières informations de position de véhicule, et un retour à l'étape (103, 203) de détermination d'emplacements de stationnement candidats à partir des premiers emplacements de stationnement disponibles sur la base des premières informations de position d'emplacement de stationnement et des premières informations de position de véhicule.

3. Procédé selon la revendication 1, dans lequel ladite mise à jour des emplacements de stationnement candidats sur la base des deuxièmes informations de position d'emplacement de stationnement des seconds emplacements de stationnement disponibles et des deuxièmes informations de position de véhicule lorsque les seconds emplacements de stationnement disponibles ne sont pas les emplacements de stationnement candidats comprend :
une planification de troisièmes trajectoires de stationnement correspondant aux seconds emplacements de stationnement disponibles sur la base des deuxièmes informations de position d'emplacement de stationnement des seconds emplacements de stationnement disponibles et des deuxièmes informations de position de véhicule lorsque les seconds emplacements de stationnement disponibles ne sont pas les emplacements de stationnement candidats ;
une détermination des seconds emplacements de stationnement disponibles à titre d'emplacements de stationnement candidats, et un enregistrement des deuxièmes informations de position de véhicule à titre de point d'itinéraire lorsque les troisièmes trajectoires de stationnement correspondant aux seconds emplacements de stationnement disponibles sont planifiées avec succès et que le nombre d'emplacements de stationnement candidats n'a pas atteint un nombre prédéfini ; et
lorsque les troisièmes trajectoires de stationnement correspondant aux seconds emplacements de stationnement disponibles sont planifiées avec succès et que le nombre des emplacements de stationnement candidats atteint le nombre prédéfini, un remplacement des emplacements de stationnement candidats avec les seconds emplacements de stationnement disponibles, des distances entre les seconds emplacements de stationnement disponibles et le véhicule étant inférieures à des distances entre les emplacements de stationnement candidats et le véhicule, et un enregistrement des deuxièmes informations de position de véhicule à titre de point d'itinéraire.

4. Procédé selon la revendication 1, comprenant en outre, après ladite détermination d'emplacements de stationnement candidats à partir des premiers emplacements de stationnement disponibles, et un affichage des emplacements de stationnement candidats sur un terminal de véhicule :
une détermination d'un emplacement de stationnement cible à partir des emplacements de stationnement candidats en réponse à une instruction d'opération d'un utilisateur pour le terminal de véhicule ;
une acquisition de troisièmes informations de position de véhicule du véhicule et de troisièmes informations de position d'emplacement de stationnement de l'emplacement de stationnement cible ; et
une planification d'une quatrième trajectoire de stationnement correspondant à l'emplacement de stationnement cible sur la base des troisièmes informations de position d'emplacement de stationnement et des troisièmes informations de position de véhicule, et une réalisation d'un stationnement selon la quatrième trajectoire de stationnement.

5. Procédé selon la revendication 4, comprenant en outre :
une planification d'une cinquième trajectoire de stationnement correspondant à l'emplacement de stationnement cible sur la base des troisièmes informations de position de véhicule, du point d'itinéraire et des troisièmes informations de position d'emplacement de stationnement, et une réalisation d'un stationnement selon la cinquième trajectoire de stationnement lorsque la quatrième trajectoire de stationnement n'est pas planifiée avec succès.

6. Dispositif de stationnement automatique d'un véhicule, dans lequel le véhicule présente une zone de stationnement correspondante, et le dispositif **caractérisé par** :
un premier module de détermination d'emplacements de stationnement disponibles (401), configuré pour déterminer de premiers emplacements de stationnement disponibles au sein de la zone de stationnement tandis que le véhicule se déplace ;
un module d'acquisition d'informations de position (402), configuré pour acquérir de premières informations de position d'emplacement de stationnement des premiers emplacements de stationnement disponibles et de premières informations de position de véhicule du véhicule ;
un module de détermination d'emplacements de stationnement candidats (403), configuré pour déterminer des emplacements de stationnement candidats à partir des premiers emplacements de stationnement disponibles sur la base des premières informations de position d'emplacement de stationnement et des premières informations de position de véhicule, et pour afficher les emplacements de stationnement candidats sur un terminal de véhicule ;
un second module de détermination d'emplacements de stationnement (404), configuré pour déterminer de seconds emplacements de stationnement disponibles au sein de la zone de stationnement et de deuxièmes informations de position de véhicule du véhicule ; et
un module de mise à jour d'emplacements de stationnement candidats (405), configuré pour mettre à jour des emplacements de stationnement candidats, et afficher des emplacements de stationnement candidats mis à jour sur le terminal de véhicule ;
dans lequel le module de détermination d'emplacements de stationnement candidats est en outre configuré pour :
planifier de premières trajectoires de stationnement correspondant aux premiers emplacements de stationnement disponibles sur la base des premières informations de position d'emplacement de stationnement et des premières informations de position de véhicule ; et
déterminer les premiers emplacements de stationnement disponibles à titre d'emplacements de stationnement candidats et enregistrer les premières informations de position de véhicule à titre de point d'itinéraire lorsque les premières trajectoires de stationnement sont planifiées avec succès ;
dans lequel le module de mise à jour d'emplacements de stationnement candidats est en outre configuré pour :
mettre à jour les emplacements de stationnement candidats sur la base des premières informations de position d'emplacement de stationnement, des premières informations de position de véhicule, des deuxièmes informations de position d'emplacement de stationnement des seconds emplacements de stationnement disponibles et des deuxièmes informations de position de véhicule lorsque les seconds emplacements de stationnement disponibles sont des emplacements de stationnement candidats ; et
mettre à jour les emplacements de stationnement candidats sur la base des deuxièmes informations de position d'emplacement de stationnement des seconds emplacements de stationnement disponibles et des deuxièmes informations de position de véhicule lorsque les seconds emplacements de stationnement disponibles ne sont pas les emplacements de stationnement candidats ;
dans lequel les premières informations de position d'emplacement de stationnement comprennent une première largeur d'entrée d'emplacement de stationnement détecté d'un des premiers emplacements de stationnement disponibles, les deuxièmes informations de position d'emplacement de stationnement comprennent une seconde largeur d'entrée d'emplacement de stationnement détecté d'un des seconds emplacements de stationnement disponibles correspondant audit un des premiers emplacements de stationnement disponibles, et
dans lequel le module de mise à jour d'emplacements de stationnement candidats est en outre configuré pour :
déterminer le fait qu'un écart entre la première largeur d'entrée d'emplacement de stationnement détecté et la seconde largeur d'entrée d'emplacement de stationnement détecté est inférieur ou non à un seuil prédéfini lorsque ledit un des seconds emplacements de stationnement disponibles est un des emplacements de stationnement candidats ; et, lorsque ledit écart est inférieur au seuil prédéfini, maintenir ledit un des seconds emplacements de stationnement disponibles à titre de l'un des emplacements de stationnement candidats.

7. Dispositif selon la revendication 6, comprenant en outre :
un moyen de planification de deuxièmes trajectoires de stationnement correspondant aux emplacements de stationnement candidats sur la base du point d'itinéraire et des deuxièmes informations de position d'emplacement de stationnement des seconds emplacements de stationnement disponibles lorsque l'écart entre la première largeur d'entrée d'emplacement de stationnement détecté et la seconde largeur d'entrée d'emplacement de stationnement détecté est supérieur ou égal au seuil prédéfini ;
un moyen de maintien des emplacements de stationnement candidats lorsque les deuxièmes trajectoires de stationnement correspondant aux emplacements de stationnement candidats sont planifiées avec succès ;
lorsque les deuxièmes trajectoires de stationnement correspondant aux emplacements de stationnement candidats ne sont pas planifiées avec succès, un moyen d'annulation des emplacements de stationnement candidats, de considération des seconds emplacements de stationnement disponibles à titre de premiers emplacements de stationnement disponibles, des deuxièmes informations de position d'emplacement de stationnement à titre de premières informations de position d'emplacement de stationnement, et des deuxièmes informations de position de véhicule à titre de premières informations de position de véhicule, et de retour pour une réalisation d'une détermination d'emplacements de stationnement candidats à partir des premiers emplacements de stationnement disponibles sur la base des premières informations de position d'emplacement de stationnement et des premières informations de position de véhicule.

8. Véhicule, comprenant un processeur et une mémoire, la mémoire comprenant un programme informatique stocké dessus qui, lorsqu'il est exécuté par le processeur, résulte en la réalisation des étapes du procédé pour un stationnement automatique d'un véhicule selon l'une quelconque des revendications 1 à 5.

9. Support de stockage lisible par ordinateur, comprenant un programme informatique stocké dessus qui, lorsqu'il est exécuté par un processeur, résulte en la réalisation des étapes du procédé pour un stationnement automatique d'un véhicule selon l'une quelconque des revendications 1 à 5.
